# EUROPEAN PATENT APPLICATION

(11) **EP 4 435 952 A1**
(43) Date of publication of application: **25.09.2024**
(21) Application number: 22892965.9
(22) Date of filing: 02.06.2022
(51) Int. Cl.: H01M 50/262, H01M 50/247, H01M 50/216

(54) **BATTERY SAFETY COVER**

(30) Priority: 15.11.2021 KR 20210156636
(71) Applicant: i-Sens, Inc., Seoul 06646 (KR)
(72) Inventor: CHOI, Hyun Ho, Seoul 06646 (KR); RYU, Goang Yel, Seoul 06646 (KR); WANG, Ji Hoon, Seoul 06646 (KR)
(74) Representative: HGF
(86) International application number: PCT/KR2022/007875
(87) International publication number: WO 2023/085542

(57) **Abstract**

According to an aspect of the present invention, a battery cover may be provided, the battery cover characterized by comprising: a cover plate which covers a battery accommodation space of a device body, a pressing plate formed to be bent downward and extend from one side of the cover plate, a locking plate forming a locking part caught on one side of the device body to fix a covering state of the cover plate and disposed to be spaced apart from and face the pressing plate, and a connecting part which connects lower ends of the pressing plate and the locking plate, wherein, when the pressing plate is pressed and manipulated, the pressing plate is rotated about a connecting portion between the pressing plate and the cover plate as a virtual hinge axis, and locking of the locking part is released by the rotation of the pressing plate.

## Description

### TECHNICAL FIELD

The present invention relates to a safety battery cover, and more specifically, to a safety battery cover capable of preventing an accident such as a battery swallowing accident in infants and young children who separate a battery cover by making it difficult to manually separate a fastening unit fastened to a device body.

### BACKGROUND

In general, electronic devices operate by receiving electricity and are equipped with separate power lines or batteries to receive power.

Batteries installed in electronic devices may be classified into primary batteries or secondary batteries according to whether the batteries are reusable. A primary battery is a battery discarded after a single use and formed of an alkali, manganese (Mn), or lithium material. A secondary battery is a battery which can be repeatedly used through charging and is formed of a nickel-hydrogen (Ni-MH), nickelcadmium (NI-Cd), lithium-ion (Li-ion), or lithium-polymer (Li-Po) material.

Electronic devices, which have a relatively long use lifetime or are repeatedly used, have built-in secondary batteries so that the electronic devices can be repeatedly used through charging without replacing the batteries, and electronic devices, which have a relatively short use lifetime or are used once, use primary batteries installed therein, and if necessary, the electronic devices can be repeatedly used by replacing and installing primary batteries.

Accordingly, when electronic devices include built-in secondary batteries that do not need to be replaced unless a problem such as battery performance degradation occurs, battery covers do not need to be provided, but electronic devices with built-in secondary batteries should be provided with battery covers for battery replacement.

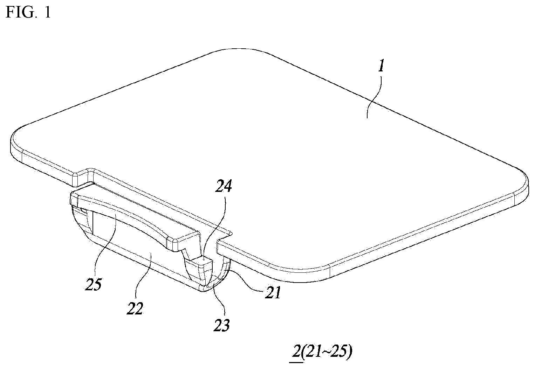

FIG. 1 is a view illustrating an example of the conventional battery cover. The conventional battery cover will be described with reference to FIG. 1. The conventional battery cover may include a cover plate 1 covering a battery accommodation space formed in a device body and a fastening unit 2 fastened to or unfastened from the device body to fix or unfasten the cover plate 1 covering the battery accommodation space.

The fastening unit 2 of the conventional battery cover will be described in more detail. The fastening unit 2 may include a first vertical plate 21 formed to be bent downward and extend from one side of the cover plate 1, a second vertical plate 22 forming a locking part 24 caught on one side of the device body to fix a covering state of the cover plate 1 and disposed to be spaced apart from and face the first vertical plate 21, a connecting part 23 connecting lower ends of the first vertical plate 21 and the second vertical plate 22, and a locking hook 25 formed to protrude from an upper end of the second vertical plate 22 in a direction away from the first vertical plate 21.

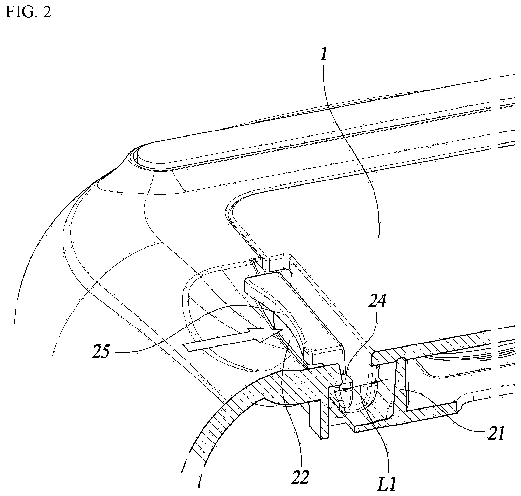

When the locking part 24 of the fastening unit is caught on the device body, a fastening state of the conventional battery cover to the device body is maintained, and when the conventional battery cover is lifted upward after a pressing manipulation is applied to release the locking of the locking part 24, the conventional battery cover may be separated from device body. The process of separating the conventional battery cover will be described in more detail with reference to FIG. 2. In the conventional battery cover, when a user presses and manipulates the second vertical plate 22 or the locking hook 25 toward the first vertical plate 21 using a finger, the second vertical plate 22 rotates toward the first vertical plate 21 about the connecting part 23 as a virtual hinge axis, and the locking of the locking part 24 is released. That is, in the conventional battery cover, the locking of the locking part 24 is released while a separation distance L1 between the first vertical plate and the second vertical plate decreases. Accordingly, when the locking of the locking part 24 is released, the user lifts the battery cover using the locking hook 25 to separate the battery cover from the device body.

As described above, the conventional battery cover has a structure which can be easily manipulated and separated using a small force. Accordingly, the conventional battery cover has an advantage that anyone can easily separate the conventional battery cover. However, the advantage of the conventional battery cover allows infants and young children to easily separate the battery cover as well as an adult. Incidentally, among batteries installed in the device bodies, batteries having a very small size, such as button cells (coil cells), are also included, and since small batteries pose a risk of swallowing accidents to infants and young children, the ease of separation and manipulation of the conventional battery cover has a problem in that an accident such as a battery swallowing accident may occur in infants and young children.

### DETAILED DESCRIPTION OF THE INVENTION

### TECHNICAL PROBLEM

The present invention is to solve the problem of the above-described related art and is directed to providing a safety battery cover which makes it difficult to manually separate a fastening unit fastened to a device body.

### TECHNICAL SOLUTION

According to an aspect of the present invention, there is a battery cover including a cover plate which covers a battery accommodation space of a device body, a pressing plate formed to be bent downward and extend from one side of the cover plate, a locking plate forming a locking part caught on one side of the device body to fix a covering state of the cover plate and disposed to be spaced apart from and face the pressing plate, and a connecting part which connects lower ends of the pressing plate and the locking plate, wherein, when the pressing plate is pressed and manipulated, the pressing plate is rotated about a connecting portion between the pressing plate and the cover plate as a virtual hinge axis, and locking of the locking part is released by the rotation of the pressing plate.

The locking plate may not protrude from an outer surface of the device body in a state in which the locking part is caught on the device body.

The battery cover may further include a gap maintaining part which connects the cover plate and the locking plate to maintain a separation distance between the pressing plate and the locking plate.

The battery cover may further include a locking hook disposed above a pressing part formed at a central portion of a lower end of the pressing plate and protruding from the pressing plate.

The battery cover may further include a guard part for preventing the pressing part from being pressed and manipulated manually.

The guard part may be disposed on the pressing part or around pressing part to protrude from the pressing plate.

The guard part may be formed in a plate shape and provided as a pair of guard parts, and the pair of guard parts are disposed on both side end portions of the pressing part to face each other.

The guard part may be formed so that a surface or side exposed in a protruding direction is formed to be inclined downward as a distance from the pressing plate increases.

### EFFECT OF THE INVENTION

According to the present invention, it is possible to prevent accidents such as battery swallowing accidents occurring in infants and young children by making it difficult to manually separate a fastening unit provided to be fastened to a device body.

### BRIEF DESCRIPTION OF THE DRAWINGS

FIG. 1 is a schematic view illustrating a conventional battery cover;
FIG. 2 is a view for describing a process in which the conventional battery cover is separated from a device body;
FIG. 3 is a view illustrating a state in which a battery cover according to one embodiment of the present invention is separated from a device body;
FIG. 4 is a schematic view illustrating the battery cover according to one embodiment of the present invention;
FIG. 5 is an enlarged view illustrating a fastening unit according to one embodiment of the present invention;
FIG. 6 is a view for describing a process in which the battery cover according to one embodiment of the present invention is separated from the device body;
FIG. 7 is a view illustrating a location of a pressing part in a pressing plate according to one embodiment of the present invention;
FIG. 8 is a view illustrating a guard part and a locking hook according to one embodiment of the present invention; and
FIG. 9 is a view illustrating an example of a tool used for separating and manipulating the battery cover according to one embodiment of the present invention.

### DETAILED DESCRIPTION OF EXEMPLARY EMBODIMENTS

It should be noted that terms used in the present invention are only for describing particular embodiments and are not intended to limit the present invention. In addition, unless otherwise defined, all technical terms used in the present invention should be interpreted to have meanings generally understood by those skilled in the art to which this invention belongs, and should not be interpreted with overly idealized or narrow meanings. In addition, when a technical term used in the present invention is an incorrect technical term which cannot accurately describe the spirt of the present invention, the technical term should be understood by being replaced with a technical term which can be correctly understood by those skilled in the art.

The singular forms used in the present specification are intended to include the plural forms as well unless the context clearly indicates otherwise. The term "comprise" or "include," when used herein, should not be interpreted as necessarily including all of the components or various operations stated in the specification, and it should be interpreted that some of the stated components and operations may be omitted or additional components and operations may be further included.

In addition, it should be noted that the accompanying drawings are only for facilitating understanding of the spirit of the present invention, and the spirit of the present invention should not be interpreted to be limited by the accompanying drawings.

Hereinafter, a battery cover according to the present invention will be described in more detail with reference to the accompanying drawings.

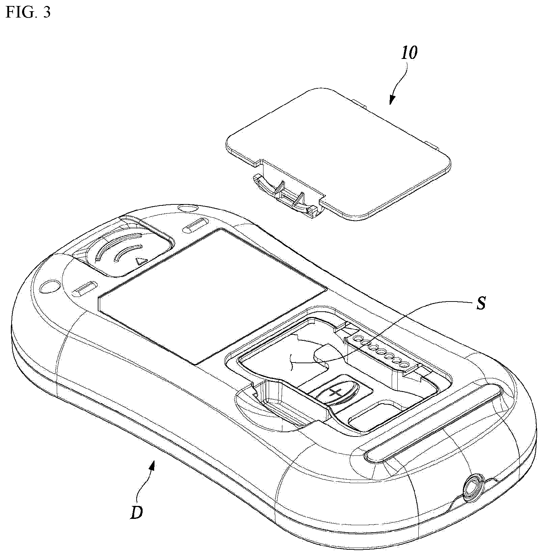

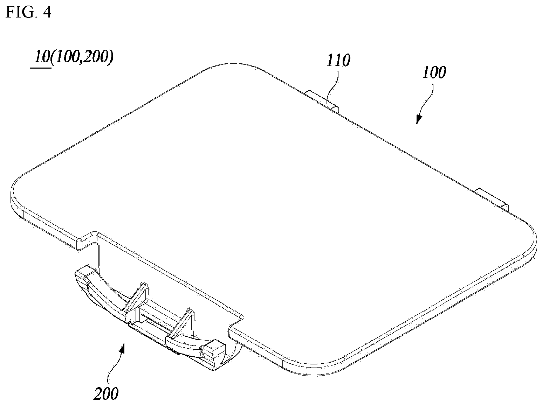

FIG. 3 is a view illustrating a state in which a battery cover according to one embodiment of the present invention is separated from a device body, and FIG. 4 is a schematic view illustrating the battery cover according to one embodiment of the present invention.

As illustrated in FIG. 3, a battery cover 10 according to one embodiment of the present invention is coupled to a device body D to cover a battery accommodation space S formed for accommodating and installing a battery. To this end, the battery cover 10 may include a cover plate 100 which covers the battery accommodation space S and a fastening unit 200 fastened to the device body D.

The cover plate 100 may have a plate shape having a predetermined area to cover an upper side of the battery accommodation space S. The fastening unit 200 fastened to the device body D is connected to one side of the cover plate 100. The fastening unit 200 may be fastened to one side of the battery accommodation space of the device body to fix a state in which the cover plate 100 covers the battery accommodation space S.

The cover plate 100 may include a locking protrusion 110. The locking protrusion 110 may be disposed at an opposite side of the fastening unit 200. A groove into which the locking protrusion 110 is inserted may be formed in a sidewall of the battery accommodation space of the device body, and a user may couple the battery cover 10 to the device body through a process of inserting the locking protrusion 110 of the cover plate into the groove and fastening the fastening unit 200 to the device body. In addition, the user may separate the battery cover 10 from the device body D by performing the above-described coupling process in reverse order.

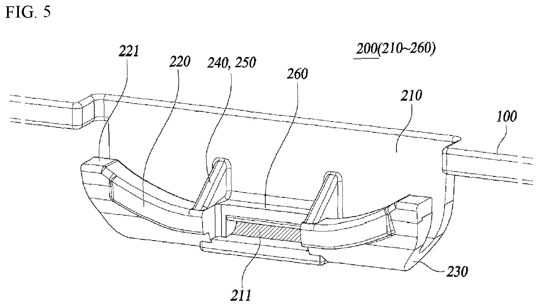

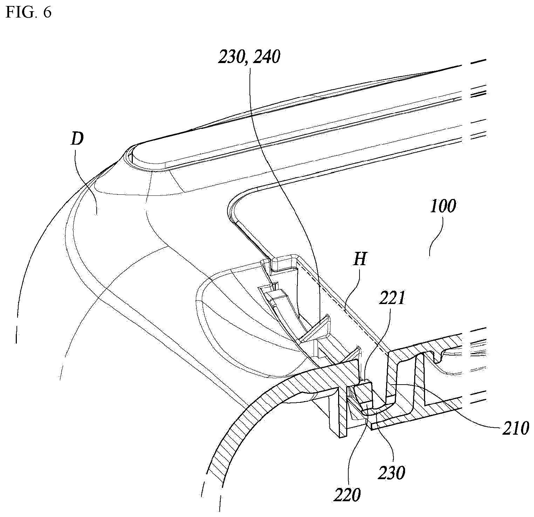

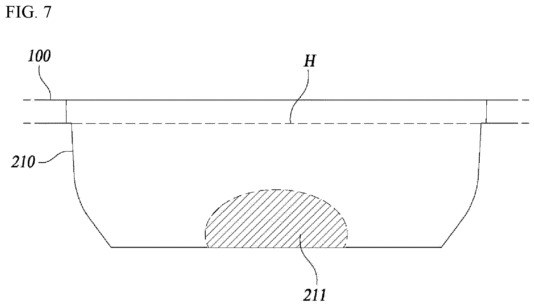

FIG. 5 is an enlarged view illustrating the fastening unit according to one embodiment of the present invention, FIG. 6 is a view for describing a process in which the battery cover according to one embodiment of the present invention is separated from the device body, and FIG. 7 is a view illustrating a location of a pressing part in a pressing plate according to one embodiment of the present invention.

The fastening unit 200 of the battery cover 10 according to the present embodiment will be described in more detail with reference to FIG. 5. The fastening unit 200 may include a pressing plate 210 forming a pressing part 211, a locking plate 220 spaced apart from and facing the pressing plate 210, and a connecting part 230 which connects the pressing plate 210 and the locking plate 220.

The pressing plate 210 is formed to be bent downward and extend from one side of the cover plate 100. The locking plate 220 may be disposed to face the pressing plate 210 in a state of being spaced a predetermined distance from the pressing plate 210 and may form a locking part 221 caught on one side of the device body to fix a fastening state between the fastening unit 200 and the device body. In this case, the locking part 221 may be formed on each of the upper ends of both side ends of the locking plate 220.

The connecting part 230 may connect the lower ends of the pressing plate 210 and the locking plate 220. Accordingly, the pressing plate 210, the connecting part 230, and the locking plate 220 may be connected to form a "U" shaped cross section.

As described in the Discussion of Related Art, in the conventional battery cover, when the second vertical plate 22 or the locking hook 25 is pressed and manipulated, the locking of the locking part 24 may be released, and the conventional battery cover may be separated while the second vertical plate 22 forming the locking part 24 is rotated.

Conversely, the battery cover 10 according to the present embodiment may be separated from the device body D by pressing and manipulating the pressing plate 210 unlike the conventional battery cover.

The fastening unit 200 of the battery cover 10 according to the present embodiment will be described in more detail with reference to FIG. 6. In the battery cover 10 according to the present embodiment, when the pressing plate 210 is pressed and manipulated using a predetermined force or more, the pressing plate 210 may be rotated about a connecting portion H, which serves as a virtual hinge axis, between the pressing plate and the cover plate. When the pressing plate 210 rotates, the locking part 221 may integrally rotate with the pressing plate 210 so that the locking to the device body D may be released. Accordingly, in the battery cover 10 according to the present embodiment, a greater force is required for a pressing manipulation for separating the battery cover 10 compared to the conventional battery cover in which the second vertical plate forming the locking part is directly pressed and manipulated and rotated.

However, in the battery cover 10 according to the present embodiment, the user should not be able to press and manipulate the locking plate 220 to guide the pressing plate to be pressed and manipulated. Accordingly, in the battery cover 10 according to the present embodiment, in the fastening state between the fastening unit 200 and the device body D, the locking plate 220 may not protrude outward from an outer surface of the device body D.

Referring to FIG. 6, in the device body D, a guide groove for facilitating the pressing manipulation of the fastening unit 200 may be formed in one side of the battery accommodation space S. The guide groove exposes one side of the fastening unit 200 fastened to the device body D, and the locking plate 220 may have a shape corresponding to the guide groove so that an upper end surface of the locking plate 220 forms a continuous surface with the guide groove of the device body D to prevent the locking plate 220 from protruding from the outer surface of the device body D in the fastening state.

In addition, in the battery cover 10 according to the present embodiment, even when the locking plate 220 is pressed, a gap between the pressing plate 210 and the locking plate 220 may not be narrowed, and the pressing plate 210 may be allowed to rotate.

Specifically, the fastening unit 200 may further include a gap maintaining part 240 which connects facing surfaces of the pressing plate 210 and the locking plate 220 to maintain the gap between the pressing plate 210 and the locking plate 220. In this case, as illustrated in FIG. 5 or 6, the gap maintaining part 240 may be provided in the form of a rib which connects the locking plate 220, the connecting part 230, and the pressing plate 210.

Meanwhile, as described above, the battery cover 10 according to the present embodiment may be separated from the device body D by pressing and manipulating the pressing plate 210, and in this case, there may be a difference in pressing efficiency according to a pressing and manipulating location on the pressing plate 210. That is, even when the pressing manipulation is performed using the same force, a rotational displacement of the pressing plate 210 may vary according to the pressing and manipulating location on the pressing plate 210.

Specifically, as illustrated in FIG. 7, since a hinge axis H for rotation by the pressing manipulation is formed at an upper end of the pressing plate 210, and the pressing efficiency of a lower end portion far from the hinge axis H may be greater than the pressing efficiency of an upper end portion. Accordingly, when the user presses and manipulates the pressing plate 210, the user should press the lower end portion of the pressing plate 210. When the upper end portion of the pressing plate 210 is pressed and manipulated, since the rotational displacement of the pressing plate 210 is insufficient, the locking of the locking part 221 may not be released, and when the upper end portion of the pressing plate 210 is pressed and manipulated using a greater force, the pressing plate 210 may be damaged.

In addition, as described above, since the locking part 221 is formed on each of both side end portions of the locking plate 220, when the pressing plate 210 is rotated, the both side ends should be rotated together without being biased to one side end to release the locking of the two locking parts 221 together. Accordingly, when the user presses and manipulates the pressing plate 210, the user should press a central portion of the pressing plate 210.

That is, the pressing part 211 which is a region that is pressed and manipulated to separate the battery cover 10 from the device body may be formed at a central portion of the lower end of the pressing plate 210 as illustrated in FIG. 7, and the user may press and manipulate the pressing part 211 to separate the battery cover 10 from the device body.

In the battery cover 10 according to the present embodiment, the pressing part 211 may be provided to be difficult to manually press and manipulate. That is, the battery cover 10 according to the present embodiment may be provided so that the pressing part 211 is pressed and manipulated only using a separate tool.

To this end, the fastening unit 200 may further include a guard part 250 which prevents the pressing part 211 from being pressed and manipulated manually. The guard part 250 may be disposed on the pressing part 211 or around the pressing part 211 to protrude from the pressing plate 210 and provided as one guard part 250 or a plurality of guard parts 250.

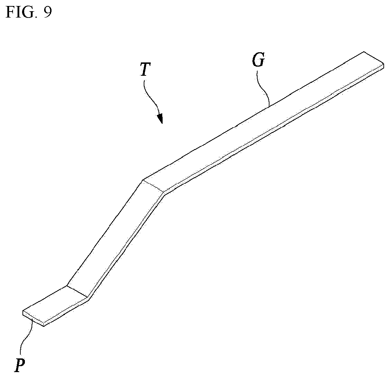

Preferably, the guard part 250 may be formed in a plate shape and provided as a pair of guard parts 250 disposed on both side end portions of the pressing part 211 to face each other. The pair of guard parts 250 may decrease a left-right width of the pressing part 211 and decrease a left-right width of a space in front of the pressing part 211 as well. Accordingly, the pair of guard parts 250 allow the pressing part 211 to be pressed and manipulated using only a tool whose end portion is thinly formed and prevent the pressing part 211 from be pressed using a finger that is thicker than a separation distance between the pair of guard parts 250. Here, the tool for pressing and manipulating the pressing part 211 will be described in more detail with reference to FIG. 9.

However, as described above, even when the pair of guard parts 250 reduce the width of the pressing part 211 or the space in front of the pressing part 211, the user may manually press and manipulate the guard part 250 to rotate the pressing plate 210.

To prevent this, the guard part 250 may be formed so that a surface or side exposed in a direction in which the guard part 250 protrudes from the pressing plate 210 is formed to be inclined downward as a distance from the pressing plate 210 increases. The shape of the guard part 250 allows a direction in which a force due to the pressing manipulation of the guard part 250 acts to be changed to a diagonally downward direction from a rotating direction of the pressing plate 210. Accordingly, the rotational displacement of the pressing plate 210 due to the pressing manipulation of the guard part 250 may be minimized, and thus, even when the guard part 250 is manually pressed and manipulated, since the rotational displacement of the pressing plate 210 is insufficient, the locking of the locking part 221 may not be released.

In the fastening unit 200 according to the present embodiment, although the gap maintaining part 240 and the guard part 250 may be separately provided, preferably, the gap maintaining part 240 may perform a function of the guard part 250, or the guard part 250 may perform a function of the gap maintaining part 240 to simplify the structure. That is, one component may perform the functions of both the gap maintaining part 240 and the guard part 250.

Meanwhile, when the pressing part 211 is pressed and manipulated using the separate tool, although the locking of the locking part 221 may be released, the battery cover 10 should be lifted to separate the battery cover 10 from the device body in a state in which the locking of the locking part 221 is released. The fastening unit 200 according to the present embodiment may further include a locking hook 260 to facilitate lifting the battery cover 10 in a state in which the pressing part 211 is pressed using the tool.

Referring to FIG. 5, the locking hook 260 may be disposed above the pressing part 211 to protrude from the pressing plate 210 and have a predetermined length in a left-right direction. Preferably, the locking hook 260 may be disposed to connect the pair of guard parts 250 so that the locking hook 260 blocks an entire upper region of the pressing part 211.

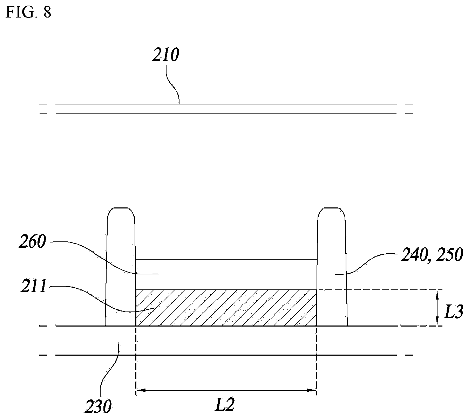

FIG. 8 is a view illustrating the guard part and the locking hook according to one embodiment of the present invention, and FIG. 9 is a view illustrating an example of the tool used for separating and manipulating the battery cover according to one embodiment of the present invention.

As described above, the user may separate the battery cover 10 from the device body by pressing and manipulating the pressing part 211 of the pressing plate, and the pressing part 211 may be formed at the central portion of the lower end of the pressing plate 210.

An area of the pressing part 211 may be reduced due to the pair of guard parts 250 and the locking hook 260. Specifically, as illustrated in FIG. 8, the guard parts 250 are disposed to protrude from both side end portions of the pressing part 211, and the locking hook 260 may be disposed to protrude from an upper end portion of the pressing part 211. In addition, since the pressing part 211 is formed at the lower end portion of the pressing plate 210 and the connecting part 230 is disposed at the lower end of the pressing plate 210, the connecting part 230 may be disposed to protrude under the pressing part 211. Accordingly, all of the upper, lower, left, and right sides of the pressing part 211 or the space in front of the pressing part 211 are surrounded by the locking hook 260, the connecting part 230, and the guard parts 250, and not only the left-right width of the pressing part 211 or the space in front of the pressing part 211 but also a vertical height thereof may also be reduced.

Preferably, the left-right width of the pressing part 211, that is, a separation distance L2 between the guard parts may be 5 mm or less, and the vertical height of the pressing part 211, that is, a separation distance L3 between the locking hook and the connecting part may be 1.5 mm or less so that it is difficult to press the pressing part 211 using even the small fingers of infants or young children. Accordingly, a tool with a front end thickness of less than 1.5 mm and a front end width of less than 5 mm is required to press and manipulate the pressing part 211.

Hereinafter, one example of a tool T capable of pressing and manipulating the pressing part 211 will be described with reference to FIG. 9.

The tool T may include a pressing and manipulating part P which is thinly formed on one end portion thereof to pass through the space in front of the pressing part 211 and press the pressing part 211 and a grip part G disposed on the other end portion of the pressing and manipulating part P so that the user can grip the tool T. In this case, although a length and a thickness of the grip part G may be freely defined, a length of the pressing and manipulating part P should be greater than a protruding length of the locking hook 260 or the guard part 250, a vertical thickness of the pressing and manipulating part P should be smaller than a separation distance between the locking hook 260 and the connecting part 230, and a width of the pressing and manipulating part P should be smaller than a separation distance between the guard parts 250.

Through the above-described configurations, in the battery cover 10 according to the present embodiment, the locking of the locking part 221 is hardly released by pressing and manipulating any part except the pressing part 211, and it is very difficult to manually press and manipulate the pressing part 211. Accordingly, a separate tool should be used to separate the battery cover 10 according to the present embodiment from the device body, and thus an accident such as a battery swallowing accident occurring when an infant or young child separates the battery cover 10 therefrom can be prevented.

The above description is merely an illustrative description of the technical spirit of the present invention, and various changes and modifications may be made by those skilled in the art without departing from the essential characteristics of the present invention. Therefore, embodiments disclosed in the present invention are for only describing and not for limiting the spirit of the present invention, and the scope of the spirit of the present invention is not limited by the embodiments. It should be interpreted that the scope of the invention is defined by the appended claims and encompasses all modifications and equivalents that fall within the scope of the appended claims.

## Claims

1. A battery cover comprising:
a cover plate which covers a battery accommodation space of a device body;
a pressing plate formed to be bent downward and extend from one side of the cover plate;
a locking plate forming a locking part caught on one side of the device body to fix a covering state of the cover plate and disposed to be spaced apart from and face the pressing plate; and
a connecting part which connects lower ends of the pressing plate and the locking plate,
wherein, when the pressing plate is pressed and manipulated, the pressing plate is rotated about a connecting portion between the pressing plate and the cover plate as a virtual hinge axis, and
locking of the locking part is released by the rotation of the pressing plate.

2. The battery cover of claim 1, wherein the locking plate does not protrude from an outer surface of the device body in a state in which the locking part is caught on the device body.

3. The battery cover of claim 2, further comprising a gap maintaining part which connects the cover plate and the locking plate to maintain a separation distance between the pressing plate and the locking plate.

4. The battery cover of claim 1, further comprising a locking hook disposed above a pressing part formed at a central portion of a lower end of the pressing plate and protruding from the pressing plate.

5. The battery cover of claim 4, further comprising a guard part for preventing the pressing part from being pressed and manipulated manually.

6. The battery cover of claim 5, wherein the guard part is disposed on the pressing part or around the pressing part to protrude from the pressing plate.

7. The battery cover of claim 6, wherein the guard part is formed in a plate shape and provided as a pair of guard parts, and the pair of guard parts are disposed on both side end portions of the pressing part to face each other.

8. The battery cover of claim 6, wherein the guard part is formed so that a surface or side exposed in a protruding direction is formed to be inclined downward as a distance from the pressing plate increases.
